# FASCICULE DE BREVET EUROPEEN

(11) **EP 2 480 315 B1**
(45) Date de publication et mention de la délivrance du brevet: **17.02.2016**
(21) Numéro de dépôt: 10768517.4
(22) Date de dépôt: 15.09.2010
(51) Int. Cl.: B01D 53/86

(54) **PROCEDE DE DESACIDIFICATION D'UN GAZ PAR SOLUTION ABSORBANTE AVEC ELIMINATION DU COS PAR L'HYDROLYSE CATALYTIQUE**
VERFAHREN ZUR SAUERGASABTRENNUNG AUS EINEM GASSTROM MITTELS WASCHLÖSUNG MIT COS-ENTFERNUNG DURCH KATALYTISCHE HYDROLYSE
PROCESS OF DEACIDIFICATION OF A GAS STREAM BY AN ABSORBING SOLUTION WITH ELIMINATION OF COS BY CATALYTIC HYDROLYSIS

(30) Priorité: 21.09.2009 FR 0904496
(43) Date de publication de la demande: 01.08.2012
(73) Titulaire: IFP Énergies nouvelles, 92852 Rueil-Malmaison Cedex (FR)
(72) Inventeur: GAZARIAN, Jérémy, F-38550 Clonas Sur Vareze (FR)
(86) Numéro de dépôt international: PCT/FR2010/000621
(87) Numéro de publication internationale: WO 2011/033191

(56) Documents cités:
- WO-A1-2008/103467
- WO-A1-2008/148077
- DE-A1- 19 653 652
- GB-A- 2 118 455
- US-A- 3 961 015
- US-A- 3 965 244

## Description

La présente invention concerne le domaine des procédés de désacidification d'un gaz par une solution absorbante.

On utilise couramment des procédés d'absorption mettant en oeuvre une solution aqueuse d'amine, pour retirer le dioxyde de carbone (CO₂) et l'hydrogène sulfuré (H₂S) d'un gaz. Le gaz est purifié par mise en contact avec la solution absorbante, puis la solution absorbante est régénérée thermiquement.

L'oxysulfure de carbone (COS) peut être présent au sein d'un gaz naturel mais aussi au sein d'un gaz de synthèse. Les solvants chimiques conventionnelles ne permettent pas d'éliminer efficacement le COS. Et en tout cas, les solvants chimiques conventionnels ne permettent pas d'éliminer sélectivement l'H₂S et le COS par rapport au CO₂.

Dans le cas du traitement de gaz naturel, une présence importante de COS dans le gaz de charge est souvent problématique et une spécification sévère en soufre totale dans le gaz traité est contraint par cette teneur en COS dans le gaz de charge.

Dans le cas d'un gaz de synthèse et suivant les applications avales du gaz, le COS est souvent considéré comme un polluant et le gaz traité doit contenir de très faible teneur en COS jusqu'à moins de 1 ppm.

Le document WO 96/19281 propose de traiter un gaz naturel acide en effectuant une étape d'hydrolyse catalytique du COS entre deux étapes d'absorption, le réacteur d'hydrolyse catalytique étant disposé à l'extérieur de la colonne d'absorption. La réaction d'hydrolyse en phase gaz est la suivante :

COS+H₂O ↔ H₂S+CO₂

La réaction est donc favorisée pour des faibles pressions partielles en H₂S et en CO₂. Le document WO 96/19281 propose donc de réduire la pression partielle en H₂S avant l'étape d'hydrolyse du COS en effectuant une étape d'absorption dans la section basse de la colonne d'absorption. Puis d'éliminer les gaz acides en sortie de réacteur d'hydrolyse par absorption dans la section haute de la colonne d'absorption.

Le document US 3961015 propose de traiter un gaz naturel avec hydrolyse du COS.

La présente invention propose de perfectionner le procédé décrit par le document WO 96/19281 en optimisant la distribution des flux de solution absorbante dans la section d'absorption.

De manière générale, la présente invention propose un procédé de désacidification d'un gaz comportant de l'H₂S et du COS, dans lequel on effectue les étapes suivantes :
a) on met en contact le gaz avec un premier flux de solution absorbante dans une première section d'absorption pour obtenir un effluent gazeux appauvri en H₂S et une solution absorbante chargée en H₂S, puis
b) on introduit l'effluent gazeux appauvri en H₂S dans un réacteur qui effectue une réaction d'hydrolyse du COS en H₂S et CO₂ de manière à obtenir un effluent gazeux appauvri en COS, puis
c) on met en contact l'effluent gazeux appauvri en COS avec un deuxième flux de solution absorbante dans une deuxième section d'absorption pour obtenir un gaz traité et une solution absorbante partiellement chargée en H₂S, et
d) on régénère la solution absorbante chargée en H₂S de manière à obtenir un flux de solution absorbante régénérée.
Selon l'invention, à l'étape a) le premier flux de solution absorbante comporte une première portion dudit flux de solution absorbante régénérée obtenue à l'étape d), ainsi que la solution absorbante partiellement chargée en H₂S, et à l'étape c) le deuxième flux de solution absorbante comporte une deuxième portion dudit flux de solution absorbante régénérée obtenue à l'étape d).

Selon l'invention, la première portion comporte au moins 70% volumique du flux de solution absorbante régénérée obtenue à l'étape d) et la deuxième portion comporte moins de 30% volumique du flux de solution absorbante régénérée obtenue à l'étape d).

La pression dans la première section d'absorption peut être supérieure d'au moins deux bars à la pression dans la deuxième section d'absorption, et dans ce cas, on peut élever la pression par pompage de la solution absorbante partiellement chargée en H₂S avant de l'introduire dans la première section d'absorption.

Le réacteur comporte un catalyseur de la réaction d'hydrolyse du COS qui est un oxyde de titane.

Le flux de solution absorbante régénérée peut comporter au moins une amine en phase aqueuse.

A l'étape d) on peut effectuer au moins une distillation de la solution absorbante chargée en H₂S. A l'étape d), on peut en outre effectuer une détente de la solution absorbante chargée en H₂S.

Le gaz est un gaz naturel.

La mise en oeuvre d'un débit limité de solution absorbante à l'étape c) permet de réduire significativement le diamètre de la deuxième section d'absorption tout en conservant les spécifications sur le COS. Cela implique une réduction importante du coût de l'absorbeur et une réduction du coût opératoire du procédé.

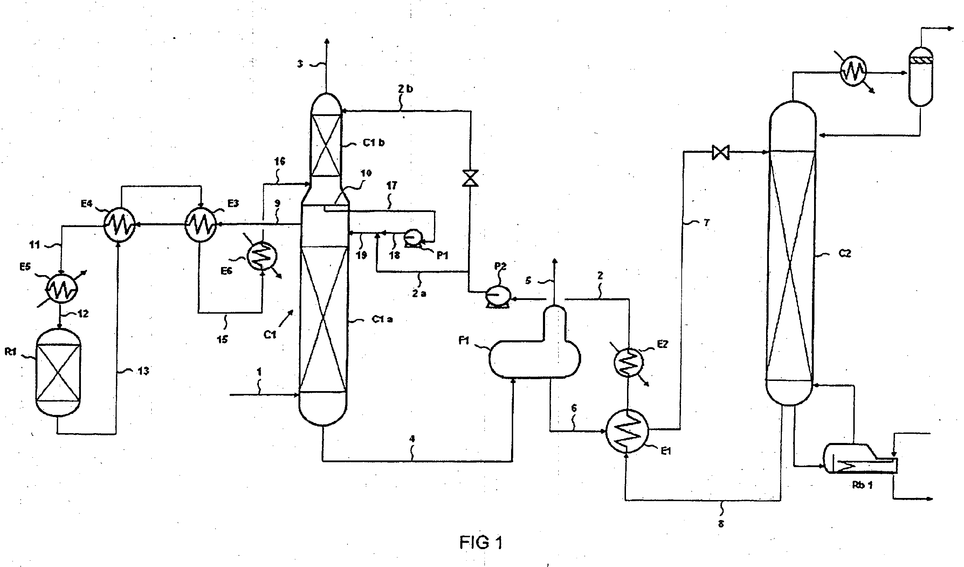

D'autres caractéristiques et avantages de l'invention seront mieux compris et apparaîtront clairement à la lecture de la description faite ci-après en se référant à la figure 1 qui schématise un exemple de réalisation du procédé selon l'invention.

En référence à la figure 1, le gaz à traiter arrive par le conduit 1 à une pression qui peut être comprise entre 1 et 150 bars, et à une température qui peut être comprise entre 10°C et 70°C. Le gaz est un gaz naturel.

Le gaz comporte des composés acides à éliminer, notamment de l'H₂S et du COS et éventuellement du CO₂. Dans le cas du gaz naturel, le gaz circulant dans le conduit 1 peut être à une pression comprise entre 20 et 100 bars.

Le gaz à traiter arrivant par le conduit 1 est mis en contact dans la section d'absorption C1 a avec une solution absorbante arrivant par le conduit 19. La section C1 a est une enceinte fermée munie d'éléments de mise en contact entre gaz et liquide, par exemple des plateaux, un garnissage en vrac ou un garnissage ordonné.

La composition de la solution absorbante est choisie pour sa capacité à absorber les composés acides.

On peut mettre en oeuvre une solution absorbante comportant un solvant chimique, par exemple une solution comportant, en général entre 10% et 80%, de préférence entre 20% et 60%, en poids d'amines, de préférence des alcanolamines et comportant au moins 20% poids d'eau, la somme des composés étant égale à 100%. On peut utiliser les amines suivantes : la MEA (monoéthanolamine), DEA (diéthanolamine), MDEA (méthyldiéthanolamine), DIPA (diisopropylamine), DGA (diglycolamine), des diamines, de la pipérazine, de l'hydroxyéthyl piperazine. On peut utiliser un type d'amine ou un mélange de plusieurs amines, par exemple un mélange d'une ou plusieurs amines tertaires avec une ou plusieurs amines primaires ou secondaires.

Alternativement, on peut mettre en oeuvre une solution absorbante comportant un solvant physique, par exemple du méthanol, de la N-formyl morpholine, des éther de glycols, du sulfolane, du thiodiéthanol. Le solvant physique peut être mélangé avec un solvant chimique mentionné ci-dessus et/ou avec de l'eau.

Dans le cas où l'on souhaite absorber sélectivement l'H₂S par rapport au CO₂, on peut mettre en oeuvre une solution absorbante comportant un solvant qui présente des propriétés thermodynamiques et cinétiques qui confèrent un caractère sélectif à la solution absorbante. On peut utiliser une amine dont les caractéristiques intrinsèques sont une vitesse de réaction avec l'H₂S au moins deux fois, voir trois fois, supérieure à sa vitesse de réaction avec le CO₂. Par exemple, la solution absorbante comporte une amine tertiaire par exemple la MDEA, ou une amine comportant une fonction amine stériquement encombrée, par exemple la DIPA. La solution absorbante sélective peut comporter, entre 10% et 80%, de préférence entre 20% et 60%, en poids d'amines, et comportant au moins 20% poids d'eau, la somme des composés étant égale à 100%. On peut également utiliser un solvant physique sélectif en solution aqueuse, comme par exemple le diméthyl éther polyethylène glycol ou la N-méthyl pyrrolidone.

Dans le cas du traitement d'un gaz naturel, la section C1 a peut fonctionner à une température comprise entre 20°C et 100°C et à une pression comprise entre 20 bars et 100 bars. Dans la section C1a, la solution arrivant par le conduit 19 absorbe les composés acides contenus dans le gaz, notamment l'H₂S et du CO₂. Cependant, compte tenu de la faible affinité des amines pour le COS, le COS reste majoritairement présent dans le gaz. Le gaz appauvri en H₂S est évacué de la section C1a par le conduit 9. Le gaz évacué par le conduit 9 est saturé en eau du fait que la solution absorbante comporte de l'eau. La solution absorbante chargée en composés acides est évacuée en fond de C1a par le conduit 4 vers une ou plusieurs étapes de régénération.

Le gaz circulant dans le conduit 9 est chauffé dans les échangeurs de chaleurs E3 et E4. Les échangeurs E3 et E4 permettent de récupérer la chaleur contenus dans le gaz chaud issu du réacteur R1 afin d'optimiser thermiquement au mieux le procédé selon l'invention. Le gaz chauffé issu de E4 par le conduit 11 peut être envoyé dans certains cas dans un échangeur de chaleur supplémentaire E5 permettant d'atteindre les niveaux de température requis pour l'étape d'hydrolyse réalisée dans R1.

Le gaz chaud issu de E5 par le conduit 12 est introduit dans le réacteur catalytique R1. Par exemple, R1 est un réacteur à lit fixe dont le catalyseur est un oxyde de titane. Le catalyseur est sous forme solide, par exemple sous forme d'extrudés. De préférence, on met en oeuvre le catalyseur CRS31 commercialisé par la société Axens. Sous l'effet du catalyseur, le COS contenu dans le gaz saturé en eau est converti en H₂S et en CO₂ selon la réaction d'hydrolyse suivante : COS + H₂O ↔ H₂S + CO₂. En général, le réacteur R1 peut fonctionner à une pression comprise entre 20 et 100 bars et à une température au moins supérieure à 100 °C.

Le gaz évacué du réacteur R1 par le conduit 13 est significativement appauvri en COS, et contient du CO₂ et de l'H₂S produits par l'hydrolyse du COS. Le gaz est refroidi dans les échangeurs E4 puis E3 par échange de chaleur avec le gaz provenant de C1 a par le conduit 9. Le gaz issu de E4 par le conduit 15 peut être refroidi dans un échangeur de chaleur supplémentaire E6 pour atteindre le niveau thermique requis dans la section d'absorption.

Le gaz refroidi issu de E6 par le conduit 16 est introduit dans la section d'absorption C1 b pour être mis en contact avec la solution absorbante arrivant par le conduit 2b. La section C1a est une enceinte fermée munie d'éléments de misé en contact entre gaz et liquide, par exemple des plateaux, un garnissage en vrac ou un garnissage ordonné. Dans la section C1 b, la solution 2b absorbe les composés acides contenu dans le gaz, notamment l'H₂S et le CO₂ produits par l'hydrolyse du COS dans le réacteur R1. Le gaz traité est évacué de la section C1b par le conduit 3. La solution absorbante chargée en composés acides est évacuées en fond de C1 b par le conduit 17, puis introduit en tête de la section d'absorption C1a via la pompe P1 et les conduits 18 et 19.

Les sections C1 a et C1 b sont distinctes l'une de l'autre. C1 a et C1 b peuvent être agencée dans deux colonnes différentes. Alternativement, les section C1a et C1b peuvent être disposées dans une même colonne C1 comme représenté par la figure 1. Un plateau étanche 10 délimite la section C1a de la section C1 b.

La solution absorbante évacuée en fond de la section C1 a par le conduit 4 est soumise à une ou plusieurs étapes de régénération. Selon la figure 1, la solution absorbante est détendue puis introduite dans un ballon flash F1 à une pression par exemple comprise entre 5 et 15 bars. La fraction vapeur libérée par la détente est évacuée en tête du ballon F1 par le conduit 5. Le liquide évacué en fond de F1 est chauffé dans l'échangeur E1 par échange de chaleur avec la solution absorbante régénérée arrivant par le conduit 8. La solution absorbante chaude issue de E1 par le conduit 7 est introduite dans la colonne de régénération thermique C2 équipée d'internes de séparation gaz/liquide, par exemple des plateaux, des garnissages en vrac ou des garnissages structurés. Une portion de la solution absorbante est prélevée en fond de C2, chauffée par le rebouilleur Rb1 par exemple à une température comprise entre 80°C et 150°C; puis réintroduite en fond de C2. Les composés acides, notamment l'H₂S et le CO₂, sont libérés sous forme gazeuse en tête de C2. La solution absorbante régénérée est évacuée en fond de C2 par le conduit 8 et refroidie dans les échangeurs de chaleur E1 puis E2 pour atteindre une température de préférence comprise entre 25°C et 50°C.

Selon l'invention, en sortie de l'échangeur E2, le flux circulant dans le conduit 2 est pompé par P2 puis divisé en deux portions : une portion principale circulant dans 2a et la portion restant circulant dans 2b. La portion principale circulant dans le conduit 2a comporte au moins 70%, de préférence au moins 80%, voire au moins 90%, du débit volumique du flux circulant dans le conduit 2. Cette portion principale est mélangée avec le flux de solution absorbante arrivant du fond de la section C1b par le conduit 18. Le mélange obtenu est injecté par le conduit 19 en tête de la section C1 a, par exemple à un niveau situé dans la moitié supérieure de la section C1 a. La portion restante de solution absorbante régénérée 2 est introduite en tête de la section C1 b par le conduit 2b. La portion circulant dans le conduit 2b comporte moins de 30%, de préférence moins de 20%, voire moins de 10%, du débit volumique du flux circulant dans le conduit 2.

La portion principale de solution absorbante régénérée 2a (composée par exemple de 80% à 90% du débit total de la solution 8) permet de capter une grande partie des composés acides dans C1 a et donc de diminuer la pression partielle en composés acides dans le gaz, favorisant l'hydrolyse du COS dans R1. Un flux restreint (composé par exemple de 10% à 20% du débit restant de la solution 8) est envoyé en tête de la section d'absorption C1b. Ce flux restreint est suffisant pour absorber la faible quantité de composés acides formés lors de l'hydrolyse du COS dans R1. De plus, le fait d'envoyer un débit de solution absorbante dans C1 b qui est inférieur au débit de solution absorbante introduit dans C1 a permet de réduire la dimension de la section C1 b par rapport aux dimensions de la section C1a. Par exemple on peut réduire le diamètre de la section C1 b. Le procédé selon l'invention permet de mettre en oeuvre une section C1 b dont le diamètre peut être au moins 30%, de préférence au moins 50%, inférieur au diamètre de la section C1 a. Par ailleurs, la section C1 b fonctionnant à une pression légèrement inférieure à celle de la pression dans la section C1 a (environ 2 à 5 bars inférieurs), il est nécessaire de comprimer par P1 la solution absorbante 17 obtenue en fond de la section C1 b jusqu'à la pression de fonctionnement de la section C1 a avant de pouvoir la recycler dans C1a. Le fait que le débit de solution absorbante circulant dans C1 a est restreint permet de réduire le coût de l'opération de compression dans P1. En outre, on envoie un débit de solution absorbante relativement faible dans la section C1 b afin d'absorber suffisamment d'H₂S et de en limitant l'absorption de CO₂.

L'exemple de fonctionnement du procédé, selon la figure 1, présenté ci-après met en évidence les avantages du procédé selon l'invention.

Le procédé selon la figure 1 est mis en oeuvre pour l'élimination du COS contenu dans un gaz naturel pour atteindre une spécification sur le gaz traité de 1 ppmv de COS. Le procédé représenté par la figure 1 est capable de réduire la teneur en soufre total contenu dans un flux gazeux d'alimentation 1. Le tableau 1 regroupe les compositions et les conditions opératoires des flux entrée-sortie du réacteur d'hydrolyse du COS obtenue à partir d'une modélisation numérique spécifique à ce réacteur.

**Tableau 1**

| Numéro du Flux Description | 12 Entrée R1 | 13 Sortie R1 |
|---|---|---|
| Temp. (°C) | 140 | 140.05 |
| Pression (Bar) | 75.5 | 74.0 |
| Flux molaire (kmol/h) | 2717.7 | 2717.7 |
| Flux massique (kg/h) | 58783.8 | 58783.8 |
| Comp. (%mol) | | |
| CO2 | 2.027 | 2.0353 |
| H2S | 0.0002 | 0.0083 |
| COS | 0.0081 | 0.0001 |
| H2O | 0.1738 | 0.1658 |
| N2 | 0.268 | 0.268 |
| C1 | 89.188 | 89.188 |
| C2 | 4.892 | 4.892 |
| C3+ | 3.443 | 3.443 |

Le tableau 1 montre que le gaz en sortie du réacteur permet d'atteindre la spécification sur le COS tout en limitant la perte de charge.

Le tableau 2 regroupe l'ensemble des compositions des flux et des conditions opératoires obtenues par un logiciel de simulation numérique de procédé spécifique aux colonnes d'absorption gaz liquide. Cet exemple montre que l'on peut conserver une certaine sélectivité sur le gaz traité tout en éliminant le COS présent dans le gaz naturel. De plus, cet exemple montre qu'un faible débit de solution absorbante 2b dans C1 b est suffisant pour atteindre une spécification sévère sur la teneur en soufre (c'est à dire moins de 4ppm de soufre), tout en limitant l'absorption du CO₂.

**Tableau 2**

| Numéro du Flux Description | 1 Gaz brut | 2a Amines vers C1a | 2b Amines vers C1b | 3 Gaz traité |
|---|---|---|---|---|
| Temp. (°C) | 37.6 | 47.6 | 47 | 48.3 |
| Pression (Bar) | 76.2 | 75.9 | 73.8 | 73.8 |
| Flux volumique (Sm3/h) | 75 000 | 320 | 45 | 63603 |
| Flux massique (kg/h) | 68896.4 | 334566 | 47048 | 50295.3 |
| Comp. (%mol) | | | | |
| CO2 | 9.6 | 0.0128 | 0.0128 | 1.6 |
| H2S | 6.0 | 0.01 | 0.01 | 0.0003 |
| COS | 0.0075 | - | - | 0.0001 |
| H2O | 0.12 | 88.7 | 88.7 | 0.1965 |
| MDEA | | 11.3 | 11.3 | |
| N2 | 0.23 | | | 0.2692 |
| C1 | 76.83 | | | 89.5463 |
| C2 | 4.235 | | | 4.9071 |
| C3+ | 2.977 | | | 3.48 |

Le tableau 3 montre également l'intérêt du procédé selon l'invention dans le cas de la problématique de l'absorption sélective de l'H₂S par rapport au CO₂ dans le gaz naturel.

**Tableau 3**

| | Procédé simulé selon document WO 96/19281 | Procédé selon l'invention |
|---|---|---|
| Numéro du flux | 3 (gaz traité) | 3 (gaz traité) |
| Comp. (%) | | |
| CO₂ | 1,2 | 1,6 |
| H₂S | 2 | 4 |
| COS (ppm) | 1 | 1 |

Tandis que le procédé selon le document WO 96/19281 contient 1,2% de CO₂ dans le gaz traité, le procédé selon l'invention permet de conserver 1,6% de CO₂ ce qui se rapproche de la teneur de 2% de CO₂ visé dans un gaz naturel destiné à être transporté par circulation dans un gazoduc.

Les considérations économiques présentées ci-après dans le tableau 4 ont été déterminées en considérant les coûts des principaux équipements (colonne d'absorption, colonne de régénération, échangeurs de chaleurs, pompe, réacteur).

Le tableau 4 indique les dimensions de la colonne d'absorption dimensionnée suivant le schéma de la figure 2 proposé dans le document WO 96/19281 et la colonne C1 suivant l'invention.

**Tableau 4**

| Critères | Colonne 24-26 selon fig2 du WO 96/19281 | Colonne C1 selon l'invention |
|---|---|---|
| Hauteur (m) | 28 | 28 |
| Diamètre (m) section haute | 2400 | 2350 |
| Diamètre (m) section basse | 2400 | 1400 |
| coût (M€) | 2,47 | 1,9 |
| gain sur le coût (%) | | 23 |

Le procédé selon l'invention permet de réduire de 23% le coût de la colonne C1.

Le procédé selon l'invention permet également de réduire la consommation énergétique de la pompe P1 comme indiqué dans le tableau 5.

**Tableau 5**

| Critères | Colonne selon document WO 96/19281 | Colonne C1 selon l'invention |
|---|---|---|
| Coût k€ | 41 | 11 |
| Gain (%) | | 73 |
| Consommation (kW) | 32 | 4 |
| Gain (%) | | 87.5 |

### Conclusions

Le procédé selon l'invention permet d'atteindre des spécifications sévères sur la teneur en COS dans le gaz traité de réduire les dimensions de la colonne d'absorption qui représente l'investissement le plus important dans le cas d'un désacidification d'un gaz naturel. Les gains obtenus sur les coûts sont significatifs. Le procédé permet aussi d'améliorer la sélectivité sur la teneur en H₂S par rapport au CO₂ dans le gaz traité, dans le cas où on met en oeuvre une solution absorbante comportant une amine sélective qui absorbe sélectivement l'H₂S par rapport au CO₂. Cet avantage du procédé selon l'invention, c'est-à-dire pouvoir éliminer sélectivement l'H₂S et le COS par rapport au CO₂, ne peut pas être atteint par des procédés conventionnels permettant d'éliminer le COS, les procédés conventionnels mettant en oeuvre un solvant physique ou un solvant chimique non sélectif.

## Revendications

1. Procédé de désacidification d'un gaz naturel comportant de l'H₂S et du COS, dans lequel on effectue les étapes suivantes :
a) on met en contact le gaz naturel avec un premier flux de solution absorbante dans une première section d'absorption (C1 a) pour obtenir un effluent gazeux appauvri en H₂S et une solution absorbante chargée en H₂S, puis
b) on introduit l'effluent gazeux appauvri en H₂S dans un réacteur (R1) comportant un catalyseur solide qui effectue une réaction d'hydrolyse du COS en H₂S et CO₂ de manière à obtenir un effluent gazeux appauvri en COS, ledit catalyseur étant un oxyde de titane, puis
c) on met en contact l'effluent gazeux appauvri en COS avec un deuxième flux de solution absorbante dans une deuxième section d'absorption (C1 b) pour obtenir un gaz traité et une solution absorbante partiellement chargée en H₂S, et
d) on régénère la solution absorbante chargée en H₂S de manière à obtenir un flux de solution absorbante régénérée,
procédé dans lequel,
à l'étape a) le premier flux de solution absorbante (19) comporte une première portion (2a) dudit flux de solution absorbante régénérée (2) obtenue à l'étape d), ainsi que la solution absorbante (18) partiellement chargée en H₂S,
à l'étape c) le deuxième flux de solution absorbante (2b) comporte une deuxième portion dudit flux de solution absorbante régénérée (2) obtenue à l'étape d),
dans lequel la première portion comporte au moins 70% volumique du flux de solution absorbante régénérée obtenue à l'étape d) et la deuxième portion comporte moins de 30% volumique du flux de solution absorbante régénérée obtenue à l'étape d).

2. Procédé selon la revendication 1, dans lequel la pression dans la première section d'absorption (C1 a) est supérieure d'au moins deux bars à la pression dans la deuxième section d'absorption (C1 b), et dans lequel on élève la pression par pompage de la solution absorbante partiellement chargée en H₂S avant de l'introduire dans la première section d'absorption.

3. Procédé selon l'une des revendications précédentes, dans lequel le flux de solution absorbante régénérée comporte au moins une amine en phase aqueuse.

4. Procédé selon l'une des revendications précédentes, dans lequel à l'étape d) on effectue au moins une distillation de la solution absorbante chargée en H₂S.

5. Procédé selon la revendication 4, dans lequel à l'étape d) on effectue en outre une détente de la solution absorbante chargée en H₂S.

6. Procédé selon l'une des revendications précédentes, dans lequel la solution absorbante comporte un solvant qui permet une élimination sélective de l'H₂S par rapport au CO₂

7. Procédé selon la revendication 6, dans lequel la solution absorbante comporte une amine tertiaire dont la vitesse de réaction avec l'H₂S est au moins deux fois supérieure à sa vitesse de réaction avec le CO₂.

## Patentansprüche

1. Verfahren zur Entsäuerung eines Erdgases, umfassend H₂S und COS, bei dem die folgenden Schritte durchgeführt werden:
a) das Erdgas wird mit einem ersten Strom einer absorbierenden Lösung in einem ersten Absorptionsabschnitt (C1 a) in Kontakt gebracht, um einen an H₂S abgereicherten gasförmigen Abstrom und eine mit H₂S beladene absorbierende Lösung zu erhalten, dann
b) der an H₂S abgereicherte gasförmige Abfluss wird in einen Reaktor (R1) eingeleitet, umfassend einen festen Katalysator, der eine Hydrolysereaktion des COS in H₂S und CO₂ durchführt, um einen an COS abgereicherten gasförmigen Abstrom zu erhalten, wobei der Katalysator ein Titanoxid ist, dann
c) der an COS abgereicherte gasförmige Abstrom wird mit einem zweiten Strom einer absorbierenden Lösung in einem zweiten Absorptionsabschnitt (C1 b) in Kontakt gebracht, um ein behandeltes Gas und eine absorbierende Lösung zu erhalten, die mit H₂S beladen ist, und
d) die mit H₂S beladene absorbierende Lösung wird regeneriert, um einen Strom einer regenerierten absorbierenden Lösung zu erhalten,
wobei bei dem Verfahren
in Schritt a) der erste Strom einer absorbierenden Lösung (19) einen ersten Anteil (2a) des Stroms einer regenerierten absorbierenden Lösung (2), die in Schritt d) erhalten wurde, sowie die teilweise mit H₂S beladene absorbierende Lösung (18) umfasst,
in Schritt c) der zweite Strom einer absorbierenden Lösung (2b) einen zweiten Anteil des Stroms einer regenerierten absorbierenden Lösung (2), die in Schritt d) erhalten wurde, umfasst,
wobei der erste Anteil mindestens 70 Vol.-% des Stroms einer in Schritt d) erhaltenen regenerierten absorbierenden Lösung und der zweite Anteil mindestens 30 Vol.-% des Stroms einer in Schritt d) erhaltenen regenerierten absorbierenden Lösung umfasst.

2. Verfahren nach Anspruch 1, bei dem der Druck in dem ersten Absorptionsabschnitt (C1 a) um mindestens zwei Bar größer als der Druck in dem zweiten Absorptionsabschnitt (C1 b) ist, und bei dem der Druck durch Pumpen der teilweise mit H₂S beladenen absorbierenden Lösung erhöht wird, bevor sie in den ersten Absorptionsabschnitt eingeleitet wird.

3. Verfahren nach einem der vorhergehenden Ansprüche, bei dem der Strom einer regenerierten absorbierenden Lösung mindestens ein Amin in wässeriger Phase umfasst.

4. Verfahren nach einem der vorhergehenden Ansprüche, bei dem in Schritt d) mindestens eine Destillation der mit H₂S beladenen absorbierenden Lösung durchgeführt wird.

5. Verfahren nach Anspruch 4, bei dem in Schritt d) ferner eine Druckminderung der mit H₂S beladenen absorbierenden Lösung durchgeführt wird.

6. Verfahren nach einem der vorhergehenden Ansprüche, bei dem die absorbierende Lösung ein Lösungsmittel umfasst, das eine selektive Beseitigung des H₂S in Bezug zum CO₂ ermöglicht.

7. Verfahren nach Anspruch 6, bei dem die absorbierende Lösung ein tertiäres Amin umfasst, dessen Reaktionsgeschwindigkeit mit dem H₂S mindestens zweimal größer als seine Reaktionsgeschwindigkeit mit dem CO₂ ist.

## Claims

1. A method of deacidizing a natural gas comprising H₂S and COS, wherein the following stages are carried out:
a) contacting the natural gas with a first absorbent solution stream in a first absorption section (C1a) so as to obtain a H₂S-depleted gaseous effluent and a H₂S-laden absorbent solution,
b) feeding the H₂S-depleted gaseous effluent into a reactor (R1) comprising a solid catalyst that performs a reaction of hydrolysis of the COS to H₂S and CO₂ so as to obtain a COS-depleted gaseous effluent, said catalyst being a titanium oxide, then
c) contacting the COS-depleted gaseous effluent with a second absorbent solution stream in a second absorption section (C1b) so as to obtain a treated gas and a partially H₂S-laden absorbent solution, and
d) regenerating the H₂S-laden absorbent solution so as to obtain a regenerated absorbent solution stream,
a method wherein,
in stage a), first absorbent solution stream (19) comprises a first portion (2a) of said regenerated absorbent solution stream (2) obtained in stage d), and partially H₂S-laden absorbent solution (18),
in stage c), second absorbent solution stream (2b) comprises a second portion of said regenerated absorbent solution stream (2) obtained in stage d),
wherein the first portion comprises at least 70 vol.% of the regenerated absorbent solution stream obtained in stage d) and the second portion comprises less than 30 vol.% of the regenerated absorbent solution stream obtained in stage d).

2. A method as claimed in claim 1, wherein the pressure in first absorption section (C1a) is at least two bars higher than the pressure in second absorption section (C1b) and wherein the pressure is raised by pumping the partially H₂S-laden absorbent solution prior to feeding it into the first absorption section.

3. A method as claimed in any one of the previous claims, wherein the regenerated absorbent solution stream comprises at least one amine in aqueous phase.

4. A method as claimed in any one of the previous claims wherein, in stage d), at least one distillation of the H₂S-laden absorbent solution is carried out.

5. A method as claimed in claim 4 wherein, in stage d), expansion of the H₂S-laden absorbent solution is also carried out.

6. A method as claimed in any one of the previous claims, wherein the absorbent solution comprises a solvent allowing selective removal of H₂S over CO₂.

7. A method as claimed in claim 6, wherein the absorbent solution comprises a tertiary amine whose rate of reaction with H₂S is at least twice as high as its rate of reaction with CO₂.
